(19) Europäisches Patentamt
European Patent Office
Office européen des brevets

(11) **EP 3 823 277 B1**

(12) **FASCICULE DE BREVET EUROPEEN**

(45) Date de publication et mention
de la délivrance du brevet:
**28.12.2022 Bulletin 2022/52**

(21) Numéro de dépôt: **20205567.9**

(22) Date de dépôt: **03.11.2020**

(51) Classification Internationale des Brevets (IPC):
*H04N 17/00* (2006.01)   *H04N 17/04* (2006.01)
*G05B 23/00* (2006.01)   *G06F 11/34* (2006.01)
*G09G 3/00* (2006.01)   *H04N 5/60* (2006.01)
*H04N 21/43* (2011.01)   *H04N 19/00* (2014.01)

(52) Classification Coopérative des Brevets (CPC):
**H04N 21/43079; H04N 17/004; H04N 17/04;**
H04N 5/60; H04N 19/00

(54) **PROCÉDÉ DE MESURE D'UNE LATENCE VIDÉO**

MESSVERFAHREN EINER VIDEOLATENZ

MEASURING METHOD FOR A VIDEO LATENCY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2019 FR 1912733**

(43) Date de publication de la demande:
**19.05.2021 Bulletin 2021/20**

(73) Titulaire: **SAGEMCOM BROADBAND SAS**
**92500 Rueil-Malmaison (FR)**

(72) Inventeurs:
• **DELPLACE, Stéphane**
**92500 RUEIL MALMAISON (FR)**

• **GAVALDA, Benjamin**
**92500 RUEIL MALMAISON (FR)**
• **BERGER, Jérôme**
**92500 RUEIL MALMAISON (FR)**

(74) Mandataire: **Lavaud, Thomas et al**
**Cabinet Boettcher**
**16, rue Médéric**
**75017 Paris (FR)**

(56) Documents cités:
**EP-A1- 2 857 973      US-A1- 2007 220 561
US-A1- 2014 267 561   US-A1- 2019 098 293**

## EP 3 823 277 B1

**Description**

L'invention concerne le domaine de la synchronisation d'un signal image produit par un équipement de restitution vidéo et d'un signal sonore produit par un équipement de restitution audio distinct de l'équipement de restitution vidéo.

ARRIERE PLAN DE L'INVENTION

Il est aujourd'hui très courant, dans les installations multimédia domestiques modernes, de connecter un équipement décodeur à un équipement de restitution vidéo et à un ou plusieurs équipements de restitution audio distincts de l'équipement de restitution vidéo, dans le but d'améliorer l'expérience acoustique d'un utilisateur lors de la restitution d'un contenu audio/vidéo (d'un film par exemple).

Des équipements et procédés de mesure le la latence dans des systèmes de transmission de signaux télévisés sont connus par exemple de la demande de brevet US 2014/0267561 A1.

Une telle installation multimédia comporte ainsi par exemple un boîtier décodeur (ou *set-top box,* en anglais) qui est connecté à une télévision et à des enceintes externes. L'utilisateur peut choisir de faire restituer le signal sonore uniquement par les enceintes externes, car leurs performances acoustiques sont meilleures que celles des enceintes intégrées de la télévision.

Dans ce type d'installation, l'équipement de restitution vidéo et l'équipement de restitution audio sont totalement indépendants et ne peuvent pas se synchroniser entre eux. Seule une prise en compte en amont des temps induits par le traitement et la restitution des composantes audio et vidéo est donc envisageable pour réaliser la synchronisation.

Il convient donc notamment de mesurer la latence vidéo, qui correspond à la différence de temps entre la mise à disposition d'un signal vidéo à l'équipement de restitution vidéo, et l'affichage de l'image correspondante sur l'écran de l'équipement de restitution vidéo.

Plusieurs méthodes sont connues pour déterminer la latence vidéo.

Une première méthode consiste, lorsque l'équipement décodeur est relié à l'équipement de restitution vidéo par une liaison HDMI, à récupérer cette information directement auprès de l'équipement de restitution vidéo en utilisant la fonction *Lip-sync* de la norme CEC (pour *Consumer Electronic Control*). Cependant, cette fonction est optionnelle et n'est en réalité que peu implémentée et rarement utilisable.

Une deuxième méthode consiste à synchroniser le signal image et le signal sonore en utilisant un équipement externe d'acquisition audio/vidéo, par exemple un *smartphone.* Cette deuxième méthode n'est pas automatique et nécessite que l'utilisateur installe une application dédiée et réalise un certain nombre d'opérations, notamment une capture audio. Cette deuxième méthode peut générer des surcoûts. Surtout, cette deuxième méthode peut être complexe à mettre en œuvre, en particulier pour les utilisateurs qui n'ont pas l'habitude d'utiliser les nouvelles technologies.

OBJET DE L'INVENTION

L'invention a pour objet de mesurer de manière simple, automatique et peu coûteuse la latence vidéo induite par un équipement de restitution vidéo.

RESUME DE L'INVENTION

En vue de la réalisation de ce but, on propose un procédé de mesure d'une latence vidéo induite par un équipement de restitution vidéo relié à un équipement décodeur dans lequel est intégré un capteur photosensible, le procédé de mesure étant mis en œuvre dans l'équipement décodeur et comportant une phase de mesure comprenant les étapes de :

- faire générer par un écran de l'équipement de restitution vidéo des signaux lumineux de test émis ;
- acquérir en utilisant le capteur photosensible des signaux lumineux capturés comprenant des signaux lumineux de test reçus qui résultent d'une réflexion des signaux lumineux de test émis sur au moins une surface d'un environnement de l'équipement de restitution vidéo ;
- acquérir des signaux de mesure produits par le capteur photosensible à partir des signaux lumineux capturés, et analyser les signaux de mesure pour obtenir une mesure de latence vidéo.

Le procédé de mesure selon l'invention permet donc d'obtenir une mesure de latence vidéo induite par l'équipement de restitution vidéo de manière simple, complètement automatique, sans requérir d'interaction particulière avec l'utilisateur. On tire profit pour cela du capteur photosensible (qui est par exemple un capteur de luminosité ou une caméra) qui est intégré dans l'équipement décodeur sans être initialement prévu pour cette fonction.

La mise en œuvre du procédé de mesure n'implique donc pas de modifier le *hardware* de l'équipement décodeur et ne génère pas de surcoût.

Le procédé de mesure ne nécessite pas l'utilisation d'un équipement externe.

Il n'est par ailleurs pas nécessaire de positionner ou d'orienter de manière particulière l'équipement décodeur, puisque le procédé de mesure ne requiert pas que le capteur photosensible soit disposé en face ou en regard de l'écran de l'équipement de restitution vidéo. Le capteur photosensible réalise en effet une capture « indirecte » de l'effet des signaux lumineux de test émis sur l'environnement de l'équipement de restitution vidéo.

On propose de plus un procédé de mesure tel que celui qui vient d'être décrit, dans lequel les signaux lumineux de test émis comprennent une succession de flashs lumineux.

On propose de plus un procédé de mesure tel que celui qui vient d'être décrit, dans lequel les flashs lumineux présentent des premières durées différentes et/ou les flashs lumineux sont espacés de deuxièmes durées différentes.

On propose de plus un procédé de mesure tel que celui qui vient d'être décrit, dans lequel le capteur photosensible est un capteur de luminosité, et dans lequel les flashs lumineux sont des flashs lumineux blancs.

On propose de plus un procédé de mesure tel que celui qui vient d'être décrit, dans lequel le capteur photosensible est une caméra, le procédé de mesure comprenant en outre l'étape préliminaire de déterminer une couleur optimale qui présente un meilleur taux de détection par la caméra, les flashs lumineux ayant pour couleur la couleur optimale.

On propose de plus un procédé de mesure tel que celui qui vient d'être décrit, dans lequel les signaux de mesure sont numérisés pour obtenir des signaux numériques de mesure, et dans lequel l'analyse des signaux de mesure comprend l'étape de calculer une corrélation entre les signaux numériques de mesure et des signaux numériques de test produits par l'équipement décodeur (1) et à partir desquels sont générés les signaux lumineux de test émis.

On propose de plus un procédé de mesure tel que celui qui vient d'être décrit, dans lequel l'équipement décodeur est agencé pour configurer une sortie à laquelle est connecté l'équipement de restitution vidéo selon une pluralité de configurations vidéo définies chacune par une ou des caractéristiques vidéo particulières, et dans lequel la phase de mesure est répétée pour chaque configuration vidéo de manière à produire une mesure de latence vidéo pour chaque configuration vidéo.

On propose de plus un procédé de mesure tel que celui qui vient d'être décrit, dans lequel la phase de mesure est réitérée à plusieurs reprises et dans lequel, à l'issue de chaque phase de mesure, la mesure de latence vidéo est enregistrée et un test statistique est réalisé pour évaluer une précision de ladite mesure de latence vidéo, la phase de mesure étant réitérée jusqu'à ce que la précision atteigne une valeur cible.

On propose de plus un procédé de mesure tel que celui qui vient d'être décrit, dans lequel le test statistique est un test de *Student.*

On propose aussi un procédé de synchronisation d'un équipement de restitution vidéo et d'au moins un équipement de restitution audio tous deux reliés à un équipement décodeur, le procédé de synchronisation comprenant les étapes de :

- mettre en œuvre le procédé de mesure précédemment décrit ;
- estimer, mesurer ou acquérir une valeur de latence audio induite par l'équipement de restitution audio ;
- calculer une différence de latence à partir de la mesure de latence vidéo et de la valeur de latence audio, et synchroniser l'équipement de restitution vidéo et l'équipement de restitution audio en utilisant la différence de latence.

On propose en outre un équipement décodeur comprenant un composant de traitement agencé pour mettre en œuvre le procédé de mesure qui vient d'être décrit.

On propose de plus un programme d'ordinateur comprenant des instructions qui conduisent le composant de traitement de l'équipement décodeur qui vient d'être décrit à exécuter les étapes du procédé de mesure qui vient d'être évoqué.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

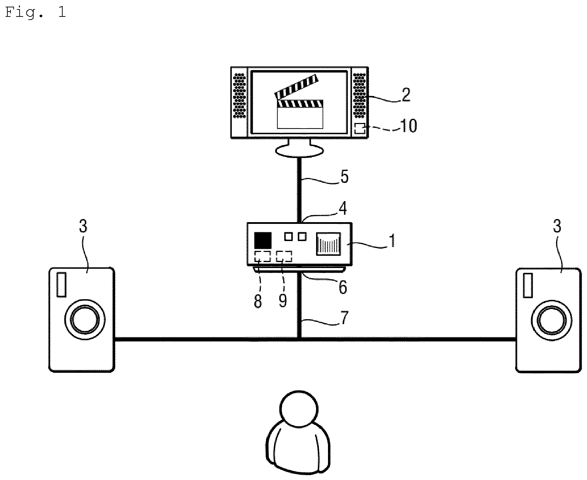

[Fig. 1] la figure 1 représente une télévision, un boîtier décodeur et deux enceintes externes ;
[Fig. 2] la figure 2 représente des étapes du procédé de mesure selon l'invention.

DESCRIPTION DETAILLEE DE L'INVENTION

L'invention est ici mise en œuvre dans une installation multimédia qui comporte un boîtier décodeur 1, une télévision 2 et des enceintes externes 3.

La télévision 2 est connectée à une sortie audio/vidéo 4 du boîtier décodeur 1 via une liaison audio/vidéo principale 5, alors que les enceintes externes 3 sont reliées à une sortie audio 6 du boîtier décodeur 1 via une liaison audio secondaire 7. La liaison audio/vidéo principale 5 et la liaison audio secondaire 7 peuvent utiliser toute technologie filaire ou sans fil adaptée.

Le boîtier décodeur 1 est ici positionné à proximité de la télévision 2, par exemple sous celle-ci ou à côté de celle-ci.

Un capteur photosensible est intégré dans le boîtier décodeur 1. Le capteur photosensible est ici un capteur de luminosité 8.

Le boîtier décodeur 1 comporte de plus un composant de traitement 9 adapté à exécuter des instructions d'un programme pour mettre en œuvre le procédé de mesure selon l'invention. Le composant de traitement 9 est ici un microcontrôleur mais pourrait être un composant différent, par exemple un processeur ou un circuit logique programmable tel qu'un FPGA (pour *Field Programmable Gate Arrays*) ou un ASIC (pour *Application Specific Integrated Circuit*).

La télévision 2 comporte des moyens de traitement vidéo 10 qui traitent le signal vidéo transmis par le boîtier décodeur 1 via sa sortie audio/vidéo 4.

Le procédé de mesure selon l'invention est destiné à mesurer une latence vidéo induite par la télévision 2. La mesure de latence vidéo est utilisée pour synchroniser la télévision 2 et les enceintes externes 3.

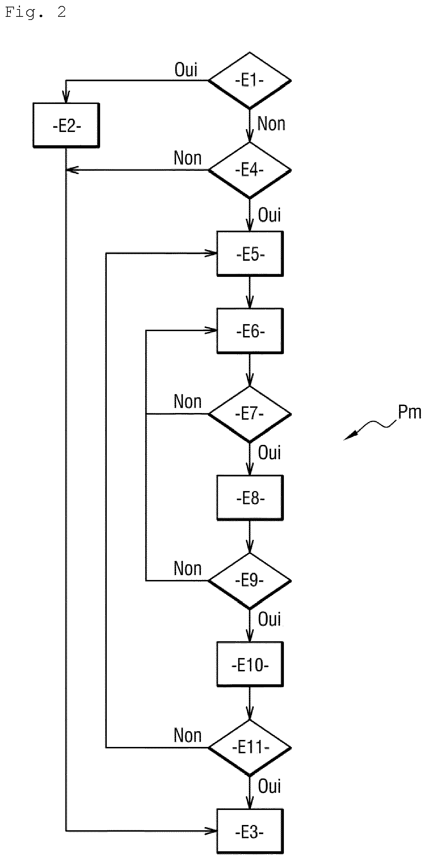

En référence à la figure 2, le procédé de mesure consiste tout d'abord à déterminer si une estimation de latence vidéo est disponible dans la télévision 2 et est donc accessible directement en utilisant la fonction *Lip-sync* de la norme CEC. L'estimation de latence vidéo est par exemple enregistrée dans une mémoire des moyens de traitement vidéo 10 de la télévision 2 (étape E1).

Si une estimation de latence vidéo est accessible directement, le boîtier décodeur 1 acquiert l'estimation de latence vidéo et considère que la valeur de latence vidéo de la télévision 2 est égale à cette estimation de latence vidéo (étape E2). Le procédé de mesure s'achève alors (étape E3).

Si une telle estimation de latence vidéo n'est pas disponible, le procédé de mesure consiste alors à vérifier que le boîtier décodeur 1 comporte bien un capteur photosensible (étape E4).

Si ce n'est pas le cas, le procédé de mesure s'achève (étape E3).

Si le boîtier décodeur 1 comporte bien un capteur photosensible, ce qui est le cas ici (le capteur de luminosité 8), le procédé de mesure comprend alors une étape de configuration (étape E5).

Le boîtier décodeur 1 est agencé pour configurer la sortie audio/vidéo 4 à laquelle est connectée la télévision 2 selon une pluralité de configurations vidéo définies chacune par une ou des caractéristiques vidéo particulières.

En effet, la latence vidéo introduite par la télévision 2 peut dépendre des caractéristiques vidéo appliquées par le boîtier décodeur 1 sur sa sortie audio/vidéo 4. Les caractéristiques vidéo sont par exemple :

- la résolution : SD/HD/FHD/4K, etc.
- le nombre d'images par seconde : 24Hz/25Hz/29.97Hz/30Hz/50Hz/59.94Hz/60Hz/100/120Hz, etc.
- l'espace de couleur utilisé : BT.709, BT.2020, etc.
- la gestion de métadonnées audio ou vidéo : SMPTE-2084, Dolby Vision, MAT 2.0, etc.

Au cours de l'étape E5, le boîtier décodeur 1 configure donc la sortie audio/vidéo 4 selon une configuration vidéo particulière, qui est la configuration vidéo « en cours ».

Puis, le procédé de mesure comprend une phase de mesure (phase Pm) destinée à produire, pour la configuration vidéo en cours, une mesure de latence vidéo de la télévision 2.

Le composant de traitement 9 du boîtier décodeur 1 génère des signaux numériques de test. Le boîtier décodeur 1 transmet ces signaux numériques de test aux moyens de traitement vidéo 10 de la télévision 2.

Le boîtier décodeur 1 commande alors la télévision 2 pour que l'écran de la télévision 2 génère des signaux lumineux de test émis (étape E6). Les signaux lumineux de test émis sont produits à partir des signaux numériques de test. Les signaux lumineux de test émis sont définis selon un « pattern » prédéfini. Par « pattern », on entend le motif temporel des signaux lumineux de test émis.

Puis, le boîtier décodeur 1 acquiert en utilisant le capteur de luminosité 8 des signaux lumineux capturés comprenant des signaux lumineux de test reçus qui résultent d'une réflexion des signaux lumineux de test émis sur au moins une surface d'un environnement de la télévision 2.

Le capteur de luminosité 8 n'est pas positionné en face de l'écran de la télévision 2 et ne capture donc pas « directement » les signaux lumineux de test émis. Le capteur de luminosité 8 acquiert des signaux lumineux capturés provenant de l'environnement de la télévision 2 et qui comprennent les signaux lumineux de test reçus qui correspondent aux signaux lumineux de test émis réfléchis par une ou des surfaces à proximité de la télévision 2 : un mur, un meuble, le plafond, etc.

Il s'agit donc d'une capture « indirecte » par le capteur de luminosité 8 de l'effet des signaux lumineux de test émis sur l'environnement de la télévision 2. On note qu'il est nécessaire que le boîtier décodeur 1 soit positionné de sorte que le capteur de luminosité 8 soit capable d'acquérir des signaux lumineux capturés comprenant les signaux lumineux de test reçus : le boîtier décodeur 1 ne doit donc par exemple pas se trouver dans un meuble fermé par une porte opaque.

Le pattern est émis au temps t0 et a une durée d_p.

Le capteur de luminosité 8 introduit une latence de mesure connue, notée l_cl.

La capture démarre à t0 et se termine à t1. Le temps t1 est la somme de la durée du pattern d_p additionnée d'un temps de garde noté d_g, correspondant à la latence maximale supportée par le système de synchronisation.

Au cours de l'étape E7, le composant de traitement 9 attend la fin du pattern. Tant que l'ensemble du pattern n'est pas détecté, ou bien tant que la durée d_p + d_g n'est pas dépassée, l'étape E6 se poursuit.

Au temps t_fdp, le capteur de luminosité 8 a détecté l'ensemble du pattern.

Le composant de traitement 9 du boîtier décodeur 1 acquiert des signaux de mesure produits par le capteur de luminosité 8 à partir des signaux lumineux capturés, et analyse les signaux de mesure pour obtenir une mesure de latence vidéo.

Ici, les signaux de mesure sont des signaux analogiques, qui sont numérisés par un convertisseur numérique analogique (intégré ou non dans le composant de traitement 9) pour obtenir des signaux numériques de mesure.

Le composant de traitement 9 calcule alors une corrélation entre les signaux numériques de mesure et les signaux numériques de test produits par le boîtier décodeur 1 et à partir desquels sont générés les signaux lumineux de test émis.

Le calcul de corrélation permet d'estimer une mesure de latence vidéo t_lv (étape E8) :

$$\overline{t\_lv = t\_fdp - d\_p - t0 - l\_cl.}$$

La mesure de latence vidéo est alors enregistrée.

On note que le pattern utilisé pour les signaux lumineux de test émis permet d'éviter toute prise en compte, lors de l'estimation de la mesure de latence vidéo, de variations lumineuses parasites possiblement présentes dans l'environnement de la télévision : allumage d'un éclairage, ouverture d'un volet, harmoniques lumineuses causées par l'éclairage, fréquence du secteur, etc.

Le pattern est par ailleurs défini de façon à permettre une mesure cohérente par des algorithmes de traitement du signal. Le critère de *Nyquist* doit être respecté, et la fréquence du pattern doit être au moins 2 à 4 fois inférieure à la fréquence d'échantillonnage du capteur de luminosité 8.

Ici, par exemple, la fréquence d'échantillonnage du capteur de luminosité 8 est égale à 5Hz.

Pour répondre à ces exigences et permettre une mesure précise et fiable de la latence vidéo, le pattern est tel que les signaux lumineux de test émis comprennent une succession de flashs lumineux blancs. Les flashs lumineux blancs sont espacés par des durées correspondant à des affichages noirs sur l'écran de la télévision 2.

Les flashs lumineux blancs et les affichages noirs du pattern doivent avoir une durée supérieure à 200ms (soit 1/5Hz) et de préférence au moins égale à 400ms (soit 2/5Hz).

Un exemple de définition temporelle de pattern est le suivant :

- flash lumineux blanc de durée 400ms ;
- affichage noir sur l'écran de durée 400ms ;
- flash lumineux blanc de durée 1200ms ;
- affichage noir sur l'écran de durée 800ms.

Le flash lumineux blanc de durée 400ms et le flash lumineux blanc de durée 1200ms sont donc espacés d'une durée de 400ms (ce qui correspond à un affichage noir sur l'écran d'une durée de 400ms). Le flash lumineux de 1200ms et le flash lumineux suivant sont espacés d'une durée de 800ms (ce qui correspond à un affichage noir sur l'écran d'une durée de 800ms) .

On constate que les flashs lumineux blancs présentent des premières durées différentes (égales ici à 400ms et à 1200ms), et que les flashs lumineux sont espacés de deuxièmes durées différentes (égales ici à 400ms et 800ms). Ce pattern permet d'éviter que la mesure ne soit perturbée par les variations lumineuses parasites qui viennent d'être évoquées.

La phase de mesure Pm est alors réitérée à plusieurs reprises.

A la fin de chaque phase de mesure Pm, la mesure de latence vidéo est enregistrée et un test statistique est réalisé avec les résultats précédents, pour évaluer une précision de la mesure de latence vidéo. Le test statistique est par exemple un test de *Student* (étape E9).

Tant qu'une précision statistique cible e_cible n'est pas atteinte, la phase de mesure est répétée.

Lorsque la précision statistique e_cible est atteinte, ou bien lorsque le nombre d'itérations atteint un seuil prédéterminé, on stoppe les mesures.

On considère que la valeur de latence vidéo induite par la télévision 2 est égale à la moyenne filtrée des mesures de latence vidéo t_lv (étape E10).

On obtient donc une bonne précision de mesure avec un nombre de patterns relativement réduit, que l'environnement soit bruité ou non.

Le composant de traitement 9 vérifie si la configuration vidéo en cours est ou non la dernière configuration vidéo à prendre en compte (étape E11).

Si c'est le cas, le procédé de mesure s'achève (étape E3).

Sinon, l'étape de configuration (étape E5) est répétée, une nouvelle configuration vidéo en cours est définie, et la latence vidéo est mesurée pour la nouvelle configuration vidéo en cours. Une mesure de latence vidéo est réalisée pour chaque configuration vidéo pouvant se présenter de façon nominale à l'utilisateur, à savoir les combinaisons supportées conjointement par le boîtier décodeur 1 et la télévision 2.

La valeur de latence vidéo obtenue grâce au procédé de mesure qui vient d'être décrit est alors utilisée par le boîtier décodeur 1 pour synchroniser la télévision 2 et les enceintes externes 3.

Le composant de traitement 9 du boîtier décodeur 1 estime, mesure ou acquiert une valeur de latence audio induite par les enceintes externes 3. Le composant de traitement 9 calcule une différence de latence à partir de la mesure de latence vidéo et de la valeur de latence audio.

Le composant de traitement 9 du boîtier décodeur 1 synchronise alors la télévision 2 et les enceintes externes 3 en utilisant la différence de latence.

Bien entendu, l'invention n'est pas limitée au mode de réalisation décrit mais englobe toute variante entrant dans le champ de l'invention telle que définie par les revendications.

L'équipement décodeur est ici un boîtier décodeur (STB), mais pourrait être un autre équipement capable de transmettre un flux vidéo et un flux audio synchronisés à des équipements différents, par exemple une console de jeu, un ordinateur, une *smart*-TV, etc.

L'équipement de restitution vidéo est ici une télévision, mais pourrait être un autre équipement, par exemple un vidéoprojecteur.

On note d'ailleurs qu'on parle d' « équipement de restitution vidéo », mais que ces termes couvrent aussi bien sûr les équipements de restitution audio/vidéo.

Chaque équipement de restitution audio est ici une enceinte externe, mais pourrait être un autre équipement muni d'un haut-parleur, par exemple une barre de son.

Le capteur photosensible n'est pas nécessairement un capteur de luminosité. Il pourrait s'agir par exemple d'une caméra de détection de présence destinée à filmer face à l'écran de la télévision, typiquement le salon de l'utilisateur.

Dans ce cas, le procédé de mesure comprend une étape préliminaire consistant à déterminer une couleur optimale qui présente un meilleur taux de détection par la caméra. Les signaux lumineux de test émis comprennent alors des flashs lumineux qui ont pour couleur la couleur optimale, ce qui permet de minimiser l'effet de potentielles sources de perturbation et/ou d'améliorer la convergence de la mesure. La définition temporelle du pattern suit ensuite la même logique que dans le cadre d'un capteur de luminosité.

## Revendications

1. Procédé de mesure d'une latence vidéo induite par un équipement de restitution vidéo (2) relié à un équipement décodeur (1) dans lequel est intégré un capteur photosensible (8), le procédé de mesure étant mis en œuvre dans l'équipement décodeur (1) et comportant une phase de mesure (Pm) comprenant les étapes de :

   - faire générer par un écran de l'équipement de restitution vidéo (2) des signaux lumineux de test émis ;
   - acquérir en utilisant le capteur photosensible (8) des signaux lumineux capturés comprenant des signaux lumineux de test reçus qui résultent d'une réflexion des signaux lumineux de test émis sur au moins une surface d'un environnement de l'équipement de restitution vidéo (2) ;
   - acquérir des signaux de mesure produits par le capteur photosensible (8) à partir des signaux lumineux capturés, et analyser les signaux de mesure pour obtenir une mesure de latence vidéo.

**2.** Procédé de mesure selon la revendication 1, dans lequel les signaux lumineux de test émis comprennent une succession de flashs lumineux.

**3.** Procédé de mesure selon la revendication 2, dans lequel les flashs lumineux présentent des premières durées différentes et/ou les flashs lumineux sont espacés de deuxièmes durées différentes.

**4.** Procédé de mesure selon l'une des revendications 2 ou 3, dans lequel le capteur photosensible (8) est un capteur de luminosité, et dans lequel les flashs lumineux sont des flashs lumineux blancs.

**5.** Procédé de mesure selon l'une des revendications 2 ou 3, dans lequel le capteur photosensible est une caméra, le procédé de mesure comprenant en outre l'étape préliminaire de déterminer une couleur optimale qui présente un meilleur taux de détection par la caméra, les flashs lumineux ayant pour couleur la couleur optimale.

**6.** Procédé de mesure selon l'une des revendications précédentes, dans lequel les signaux de mesure sont numérisés pour obtenir des signaux numériques de mesure, et dans lequel l'analyse des signaux de mesure comprend l'étape de calculer une corrélation entre les signaux numériques de mesure et des signaux numériques de test produits par l'équipement décodeur (1) et à partir desquels sont générés les signaux lumineux de test émis.

**7.** Procédé de mesure selon l'une des revendications précédentes, dans lequel l'équipement décodeur (1) est agencé pour configurer une sortie (4) à laquelle est connecté l'équipement de restitution vidéo (2) selon une pluralité de configurations vidéo définies chacune par une ou des caractéristiques vidéo particulières, et dans lequel la phase de mesure (Pm) est répétée pour chaque configuration vidéo de manière à produire une mesure de latence vidéo pour chaque configuration vidéo.

**8.** Procédé de mesure selon l'une des revendications précédentes, dans lequel la phase de mesure est réitérée à plusieurs reprises et dans lequel, à l'issue de chaque phase de mesure, la mesure de latence vidéo est enregistrée et un test statistique est réalisé pour évaluer une précision de ladite mesure de latence vidéo, la phase de mesure étant réitérée jusqu'à ce que la précision atteigne une valeur cible.

**9.** Procédé de mesure selon la revendication 8, dans lequel le test statistique est un test de *Student.*

**10.** Procédé de synchronisation d'un équipement de restitution vidéo (2) et d'au moins un équipement de restitution audio (3) tous deux reliés à un équipement décodeur (1), le procédé de synchronisation comprenant les étapes de :

- mettre en œuvre le procédé de mesure selon l'une des revendications précédentes ;
- estimer, mesurer ou acquérir une valeur de latence audio induite par l'équipement de restitution audio ;
- calculer une différence de latence à partir de la mesure de latence vidéo et de la valeur de latence audio, et synchroniser l'équipement de restitution vidéo et l'équipement de restitution audio en utilisant la différence de latence.

**11.** Equipement décodeur (1) comprenant un capteur photosensible (8) et un composant de traitement (9), l'équipement décodeur étant agencé pour mettre en œuvre le procédé de mesure selon l'une des revendications 1 à 9.

**12.** Programme d'ordinateur comprenant des instructions qui conduisent l'équipement décodeur (1) selon la revendication 11 à exécuter les étapes du procédé de mesure selon l'une des revendications 1 à 9.

**13.** Support d'enregistrement lisible par ordinateur, sur lequel est enregistré le programme d'ordinateur selon la revendication 12.

**Patentansprüche**

**1.** Messverfahren zum Messen einer Videolatenz, die von einer Videowiedergabeausrüstung (2) induziert wird, die mit einer Decoderausrüstung (1) verbunden ist, in der ein lichtempfindlicher Sensor (8) integriert ist, wobei das Messverfahren in der Decoderausrüstung (1) durchgeführt wird und eine Messphase (Pm) umfasst, die die Schritte umfasst:

- Veranlassen, dass durch einen Bildschirm der Videowiedergabeausrüstung (2) emittierte Testlichtsignale erzeugt werden;

- unter Verwendung des lichtempfindlichen Sensors (8), Erfassen von erfassten Lichtsignalen, die empfangene Testlichtsignale umfassen, die aus einer Reflexion der emittierten Testlichtsignale auf mindestens einer Oberfläche einer Umgebung der Videowiedergabeausrüstung (2) resultieren;

- Erfassen von Messsignalen, die von dem lichtempfindlichen Sensor (8) anhand der erfassten Lichtsignale erzeugt werden, und Analysieren der Messsignale, um eine Videolatenzmessung zu erhalten.

2. Messverfahren nach Anspruch 1, bei der die emittierten Testlichtsignale eine Abfolge von Lichtblitzen umfassen.

3. Messverfahren nach Anspruch 2, bei dem die Lichtblitze verschiedene erste Zeitdauern aufweisen und/oder die Lichtblitze um verschiedene zweite Zeitdauern beabstandet sind.

4. Messverfahren nach einem der Ansprüche 2 oder 3, bei dem der lichtempfindliche Sensor (8) ein Helligkeitssensor ist und bei dem die Lichtblitze weiße Lichtblitze sind.

5. Messverfahren nach einem der Ansprüche 2 oder 3, bei dem der lichtempfindliche Sensor eine Kamera ist, wobei das Messverfahren ferner den vorbereitenden Schritt des Bestimmens einer optimalen Farbe umfasst, die die beste Detektionsrate durch die Kamera aufweist, wobei die Lichtblitze als Farbe die optimale Farbe haben.

6. Messverfahren nach einem der vorhergehenden Ansprüche, bei dem die Messsignale digitalisiert werden, um digitale Messsignale zu erhalten, und bei dem die Analyse der Messsignale den Schritt des Berechnens einer Korrelation zwischen den digitalen Messsignalen und digitalen Testsignalen, die von der Decoderausrüstung (1) erzeugt werden und anhand der die emittierten Testlichtsignale erzeugt werden, umfasst.

7. Messverfahren nach einem der vorhergehenden Ansprüche, bei dem die Decoderausrüstung (1) ausgebildet ist, einen Ausgang (4) zu konfigurieren, an den die Videowiedergabeausrüstung (2) gemäß einer Vielzahl von Videokonfigurationen angeschlossen ist, die jeweils von einer oder mehreren besonderen Videocharakteristiken definiert sind, und bei dem die Messphase (Pm) für jede Videokonfiguration wiederholt wird, um so eine Videolatenzmessung für jede Videokonfiguration zu erzeugen.

8. Messverfahren nach einem der vorhergehenden Ansprüche, bei dem die Messphase mehrere Male wiederholt wird und bei dem am Ende jeder Messphase die Videolatenzmessung gespeichert und ein statistischer Test durchgeführt wird, um eine Genauigkeit der Videolatenzmessung zu evaluieren, wobei die Messphase wiederholt wird, bis die Genauigkeit einen Zielwert erreicht.

9. Messverfahren nach Anspruch 8, bei dem der statistische Test ein Student's t-Test ist.

10. Synchronisationsverfahren zum Synchronisieren einer Videowiedergabeausrüstung (2) mit mindestens einer Audiowiedergabeausrüstung (3), die beide mit einer Decoderausrüstung (1) verbunden sind, wobei das Synchronisationsverfahren die Schritte umfasst:

- Durchführen des Messverfahrens nach einem der vorhergehenden Ansprüche;
- Schätzen, Messen oder Erfassen eines Audiolatenzwerts, der von der Audiowiedergabeausrüstung induziert wird;
- Berechnen einer Latenzdifferenz anhand der Videolatenzmessung und dem Audiolatenzwert und Synchronisieren der Videowiedergabeausrüstung mit der Audiowiedergabeausrüstung unter Verwendung der Latenzdifferenz.

11. Decoderausrüstung (1), die einen lichtempfindlichen Sensor (8) und eine Verarbeitungskomponente (9) umfasst, wobei die Decoderausrüstung ausgebildet ist, das Messverfahren nach einem der Ansprüche 1 bis 9 durchzuführen.

12. Computerprogramm, umfassend Anweisungen, die die Decoderausrüstung (1) nach Anspruch 11 dazu veranlassen, die Schritte des Messverfahrens nach einem der Ansprüche 1 bis 9 auszuführen.

13. Computerlesbarer Aufzeichnungsträger, auf dem das Computerprogramm nach Anspruch 12 gespeichert ist.

**Claims**

1. A measurement method for measuring video latency induced by a piece of video playback equipment (2) that is connected to a piece of decoder equipment (1) having a photosensitive sensor (8) incorporated therein, the measurement method being performed in the decoder equipment (1) and including a measurement stage (Pm) comprising the steps of:

   • causing a screen of the video playback equipment (2) to generate emitted light test signals;
   • using the photosensitive sensor (8) to acquire captured light signals including received light test signals resulting from the emitted light test signals being reflected on at least one surface of surroundings of the video playback equipment (2);
   • acquiring measurement signals produced by the photosensitive sensor (8) from the captured light signals, and analyzing the measurement signals in order to obtain a video latency measurement.

2. A measurement method according to claim 1, wherein the emitted light test signals comprise a succession of flashes of light.

3. A measurement method according to claim 2, wherein the flashes of light present different first durations and/or the flashes of light are spaced apart by different second durations.

4. A measurement method according to claim 2 or claim 3, wherein the photosensitive sensor (8) is a brightness sensor, and wherein the flashes of light are flashes of white light.

5. A measurement method according to claim 2 or claim 3, wherein the photosensitive sensor is a camera, with the measurement method further comprising a preliminary step of determining an optimum color that presents the best detection rate by the camera, the flashes of light then having the optimum color.

6. A measurement method according to any preceding claim, wherein the measurement signals are digitized in order to obtain digital measurement signals, and wherein the analysis of the measurement signals comprises a step of calculating a correlation between the digital measurement signals and digital test signals produced by the decoder equipment (1) and from which the emitted light test signals are generated.

7. A measurement method according to any preceding claim, wherein the decoder equipment (1) is arranged to configure an output (4) to which the video playback equipment (2) is connected with a plurality of video configurations, each defined by one or more particular video characteristics, and wherein the measurement stage (Pm) is repeated for each video configuration so as to produce a video latency measurement for each video configuration.

8. A measurement method according to any preceding claim, wherein the measurement stage is reiterated several times and wherein, at the end of each measurement stage, the video latency measurement is stored and a statistical test is performed in order to evaluate the accuracy of said video latency measurement, the measurement stage being reiterated until the accuracy reaches a target value.

9. A measurement method according to claim 8, wherein the statistical test is a Student's t-test.

10. A synchronization method for synchronizing a piece of video playback equipment (2) with at least one piece of audio playback equipment (3), each said piece of equipment being connected to a piece of decoder equipment (1), the synchronization method comprising the steps of:

    • performing the measurement method according to any preceding claim;
    • estimating, measuring, or acquiring a value for the audio latency induced by the audio playback equipment;
    • calculating a latency difference from the video latency measurement and the audio latency value, and synchronizing the video playback equipment and the audio playback equipment by using the latency difference.

11. Decoder equipment (1) including a photosensitive sensor (8) and a processor component (9), the decoder equipment being arranged to perform the measurement method according to any one of claims 1 to 9.

12. A computer program including instructions that cause the decoder equipment (1) according to claim 11 to execute the steps of the measurement method according to any one of claims 1 to 9.

**13.** A computer readable storage medium having stored thereon the computer program according to claim 12.

Fig. 1

Fig. 2

**RÉFÉRENCES CITÉES DANS LA DESCRIPTION**

**Documents brevets cités dans la description**

- US 20140267561 A1